# EUROPEAN PATENT APPLICATION

(11) **EP 4 531 372 A1**
(43) Date of publication of application: **02.04.2025**
(21) Application number: 24202428.9
(22) Date of filing: 25.09.2024
(51) Int. Cl.: H04L 47/24, H04L 69/22, H04L 47/2491

(54) **METHODS FOR OPTIMIZING ROUTING OF A MESSAGE AND DEVICES THEREOF**

(30) Priority: 29.09.2023 US 202318375068
(71) Applicant: F5, INC., Seattle, WA 98104 (US)
(72) Inventor: SARANGAM, Vahnisree, Bengaluru (IN); DUT DUBE, Krishna, Jaunpur (IN); DUGGAL, Yashika, Delhi (IN)
(74) Representative: Savi, Massimiliano

(57) **Abstract**

Methods, non-transitory computer readable media, network traffic manager apparatuses, and systems that optimizes routing of a message are disclosed. The method includes obtaining a message comprising a header, wherein the header has a parameter with a value indicating one of a plurality of transmission priorities for the message. Based on the value in the parameter within the header, the method further includes identifying the one of the transmission priorities for the message. Based on the identified transmission priority of the message, the method further includes determining a target network entity for the message. The method further includes transmitting the message to the target network entity.

## Description

### FIELD

This disclosure relates to optimizing routing of a message, in particular, to optimizing routing of a latency sensitive message in a network traffic management system.

### BACKGROUND

The significance of low latency in network services has surged notably in recent years. This surge in demand may be attributed to the emerging of various popular multimedia network services and mission critical services, such as online gaming, telemedicine, and IoT, intelligent transportation systems or the like, all of which heavily rely on real-time data transmission. As these diverse applications and services continue to flourish, the imperative for minimal delay has become even more pronounced. Consequently, ongoing efforts persist to reduce latency in network infrastructure and technologies to meet the evolving demands of these varied and latency-sensitive services.

### SUMMARY

This disclosure is directed to methods and devices relating to routing a message. More specifically, the methods and devices relate to optimizing routing of a latency sensitive message in a network traffic management system. Relevant non-transitory computer readable medium and network traffic management system are also disclosed.

According to an aspect of the disclosure, a method for optimizing routing of a message is disclosed. The method may be implemented by a network traffic management system, wherein the network traffic management system may comprise one or more network traffic management apparatuses, client devices, or server devices. The method may comprise obtaining a message comprising a header with a parameter with a value indicating one of a plurality of transmission priorities for the message. The method may further comprise identifying the one of the transmission priorities for the message based on the value in the parameter within the header and determining a target network entity for the message based on the identified transmission priority of the message. The method may further comprise transmitting the message to the target network entity.

According to another example of this technology, an apparatus for optimizing routing of a message is disclosed. The apparatus may comprise memory comprising programmed instructions stored in the memory and one or more processors configured to be capable of executing the programmed instructions stored in the memory to: obtain a message comprising a header with a parameter with a value indicating one of a plurality of transmission priorities for the message. The one or more processors may further identify the one of the transmission priorities for the message based on the value in the parameter within the header, and determine a target network entity for the message based on the identified transmission priority of the message. The one or more processors may further transmit the message to the target network entity.

According to another example of this technology, a non-transitory computer readable medium is disclosed. The non-transitory computer readable medium may have stored thereon instructions for security control, comprising executable code which when executed by one or more processors, causes the one or more processors to obtain a message comprising a header with a parameter with a value indicating one of a plurality of transmission priorities for the message. The executable code may further cause the one or more processors to identify the one of the transmission priorities for the message based on the value in the parameter within the header and determine a target network entity for the message based on the identified transmission priority of the message. The executable code may further cause the one or more processors to transmit the message to the target network entity.

According to another example of this technology, a network traffic management system comprising one or more traffic management apparatuses, server devices, or client devices is disclosed. The network traffic management system may comprise memory comprising programmed instructions stored thereon and one or more processors configured to be capable of executing the stored programmed instructions to: obtain a message comprising a header with a parameter with a value indicating one of a plurality of transmission priorities for the message. The one or more processors may further identify the one of the transmission priorities for the message based on the value in the parameter within the header and determine a target network entity for the message based on the identified transmission priority of the message. The one or more processors may further transmit the message to the target network entity.

With implementations of the above and operations that will be discussed below, routing of a message which is latency sensitive may be improved and thereby a transmission delay may be shortened. In various examples of this disclosure, a better routing decision may be made based on a transmission priority of a message. The better routing of the message may take into account the transmission priority of the message, a detected delay during a transmission of the message, a failure of a network element, or any combination thereof. Therefore, an overall delay may be reduced accordingly.

The above and other aspects and their implementations are described in greater detail in the drawings, the descriptions, and the claims below.

### BRIEF DESCRIPTION OF THE DRAWINGS

The foregoing and other aspects of the present disclosure are best understood from the following detailed description when read in connection with the accompanying drawings. For the purpose of illustrating the invention, specific examples are shown in the drawings, it being understood, however, that the invention is not limited to the specific instrumentalities disclosed. Included in the drawings are the following Figures:
FIG. 1 illustrates an exemplary network traffic management system;
FIG. 2 illustrates an exemplary execution environment of a network traffic management apparatus configured to optimize routing of a latency sensitive message;
FIG. 3 illustrates an exemplary block diagram of a network traffic management apparatus;
FIG. 4 illustrates a flow diagram of an exemplary process for optimizing routing of a message by a network traffic management apparatus;
FIG. 5 illustrates an exemplary message flow with implementation of the method of optimizing routing for a message in the network traffic management system; and
FIG. 6 illustrates another exemplary message flow with implementation of the method of optimizing routing for a message in the network traffic management system.

### DETAILED DESCRIPTION

The present disclosure may be understood more readily by reference to the following detailed description of exemplary examples. Before the exemplary implementations and examples of the methods, devices, and systems according to the present disclosure are disclosed and described, it is to be understood that implementations are not limited to those described within this disclosure. Numerous modifications and variations therein will be apparent to those skilled in the art and remain within the scope of the disclosure. It is also to be understood that the terminology used herein is for describing specific implementations only and is not intended to be limiting. Some implementations of the disclosed technology will be described more fully hereinafter with reference to the accompanying drawings. This disclosed technology may, however, be embodied in many different forms and should not be construed as limited to the implementations set forth therein.

In the following description, numerous specific details are set forth. But it is to be understood that examples of the disclosed technology may be practiced without these specific details. In other instances, well-known components, structures, and techniques have not been shown in detail in order not to obscure an understanding of this description. References to "an implementation," "an example," "some examples," etc., indicate that the implementation(s) of the disclosed technology so described may include a particular feature, structure, or characteristic, but not every implementation necessarily includes the particular feature, structure, or characteristic. Further, repeated use of the phrase "in some examples" does not necessarily refer to the same implementation, although it may. Additionally, it is to be understood that particular features, structures, or characteristics that described in different examples, implementations or the like, may be further combined in various ways and being implemented in one or more implementations.

A network traffic management system may relate to a set of tools, processes, devices, and relevant technologies to control and optimize data flow within a computer network. Such network traffic management system may monitor, analyze, control and balance network traffic to maintain the performance and reliability of a computer network (e.g., make sure critical applications and services receive the necessary bandwidth or network resources are utilized efficiently). A network traffic management system may be implemented in various network topologies. Specific devices utilized and topologies designed in a network environment may depend on specific requirements and the scale of the network. Factors may include such as the size of the network, its geographic spread, the types of applications and services being offered, the organization's traffic management requirements, etc. For example, the network traffic management system may be implemented in a centralized, distributed, or cloud-based topology in various networks. The network traffic management system may be executed in various networks, include but not limited to, Local Area Networks (LAN), Wide Area Networks (WAN), Metropolitan Area Network (MAN), data center networks, cloud networks, hybrid networks, or any appropriate existing networks or the ones that may be developed in the future. Various devices may be involved in the network traffic management system, depending on the specific network and topology being used. For example, edge routers or switches, firewalls, proxies, load balancers, Content Delivery Network (CDN) servers, application servers, etc. may be included in a network traffic management system.

A network traffic management apparatus may refer to an apparatus executing one or more operations as will be described below for implementing a method of optimizing routing of a message according to various examples of this disclosure. It may also refer to one or more device(s) on which one or more operations discussed herein is implemented or executed.

A network element may relate to various essential components, devices, or software network elements in a network that collectively make up a network infrastructure. These network elements may work together to enable the transmission, routing, and management of data and maintenance of services within a network. Examples of network elements may include but not limited to switches, hubs, access points, firewalls, security appliances, load balancers, application delivery controllers, proxies, and servers. They may play distinct roles in ensuring the connectivity, security, and efficient operation of a network.

A target network entity may be any appropriate network entities. The target network entity may include, but not limited to any of above network elements, or a network device which may be a destination of a message, or a forwarding device of the message.

A latency sensitive service may refer to any service that replies on a prompt data transmission or service establishment and expects minimal delay or latency. This low latency preference or requirement may be due to the technical requirement of the service, such as multimedia related online services which may involve real-time and high volume of data transmission. Also, such low latency preference or requirement may come from the nature of the service, for example, emergency rescue. A low latency may ensure that data can be transmitted quickly between devices or between a device and a network server, to minimize delays in the user experience.

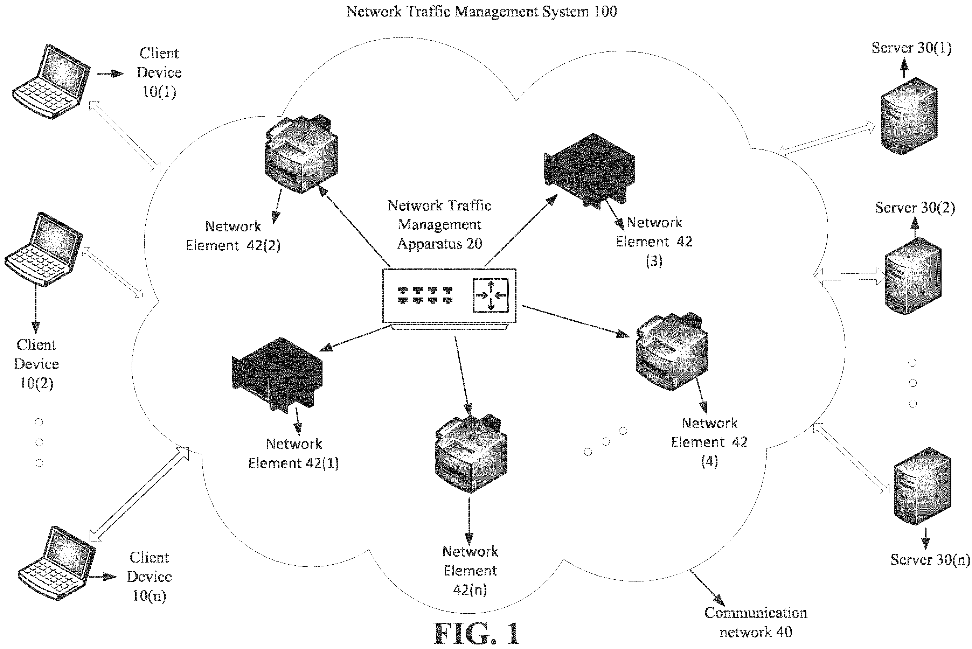

FIG. 1 illustrates an exemplary simplified network traffic management system 100 according to an example of this disclosure. As illustrated in FIG. 1, the network traffic management system 100 may comprise a plurality of client devices 10(1)-10(n), a communication network 40, and a plurality of servers 30(1)-30(n) serving the client devices 10(1)-10(n). The client devices 10 and servers 30 may communicatively connected with each other via the communication network 40.

Referring to FIG. 1, the client device 10 may send a request to the server 30 for a service (e.g., a web application). The client device 10 may also be referred to as a "client," "user equipment," or "user equipment device," which may include but is not limited to a mobile phone, smartphone, tablet, laptop computer, a smart electronics, a wearable device, a video surveillance device, an industrial wireless sensors, or appliance including an air conditioner, a television, a refrigerator, an oven and the like, or other devices that are capable of communicating wirelessly over a network. Moreover, the client device 10 may also be a proxy or a server or any network elements or devices, which may send above discussed request to the server 30 on behalf of a user equipment. For example, the client device 10 may be a proxy *(e.g.,* a forward proxy) of a private network, which forwards a request message that it received from a client device isolated within the private network. In this way, the proxy sends a request message on behalf of the isolated device and allows it to be served by server 30. In this scenario, the proxy plays the role of client device 10 in the network traffic management system 100 as illustrated in FIG. 1.

Referring to FIG. 1, server 30 may respond to the client device 10 and have one or more interactions with the client device 10 to provide the requested service or data, when receiving the client device 10's request via the communication network 40. The servers 30(1)-(n) may be any types of servers to serve a client device. For example, the servers 30(1)-(n) may be application servers that run applications, manage, and execute various tasks related to the processing of user device's requests within the network environment. Various services may be provided by the server 30. Among those services, some services may be latency sensitive. For example, some real-time multimedia communications such as video streaming, video conferencing, Voice over IP (VoIP), online gaming, video conferencing, music streaming, etc. Such multimedia communications are latency sensitive because they need to maintain natural and uninterrupted conversations or interactions. As another example, Enhanced Mobile Broadband (eMBB) involving high-speed data transmission, such as streaming 4K or 8K video content, augmented/virtual reality applications, which requires low latency to provide smooth and immersive user experiences. Other exemplary low-latency services may relate to Internet of Things (IoT), Industrial Automation, intelligent transportation systems, industrial internet, smart grids, or the like. Also, server 30 may provide mission-critical services, such as emergency services, air traffic control, financial trading, power grid control, military communications, healthcare systems (e.g., Remote Surgery and Telemedicine), etc. Therefore, those services may require more or exceptionally reliable and low latency network infrastructure and routing mechanism to support critical functions and public safety and emergency services.

Referring again to FIG. 1, the communication network 40 may comprise a plurality of network elements 42(1)-42(n) as a part of its control plane. Some of those network elements 42(1)-42(n) may have the same functionality. For example, network element 42(1) and network element 42(3) are illustrated as proxies. Other network elements, such as network element 42(2), network element 42(4), and network element 42(n) may have different functionalities. Those network elements 42(1)-42(n) together enable the communication network 40 to provide connectivity and data transmission to the client devices 10(1)-(n). As illustrated in FIG. 1, a client device 10 may communicatively connected to the communication network 40. When a client device 10 sends a message to request a service provided by a server 30, the message may go through a plurality of network elements 42(1)-42(n) before reaching its destination. During this long path, no matter whether the requested service is one of above-mentioned latency sensitive service, the message may be transmitted among the network elements 42(1)-42(n) without its latency sensitive nature being noted on the control plane of communication network 40. In other words, even though the service may be latency sensitive and thereby needs to be provided to the client device with minimal delay, this need is not considered during the transmission among those network elements 42(1)-42(n). In some cases, a message with a transmission priority may be noted by some of the network elements 42(1)-42(n) based on QoS information it carries, however, prioritized routing decisions made for such message are still limited. Therefore, it'll be good to introduce an improved routing mechanism into the transmissions over the network elements 42(1)-42(n), wherein different requirements on delay or latency by incoming messages may be considered. As illustrated in FIG. 1, network traffic management apparatus 20 implementing such improved routing mechanism may be executed on any of the network elements 42(1)-42(n) of FIG. 1. Operations of the network traffic management apparatus 20 and its routing mechanism will be described in detail below.

It is to be understood that FIG. 1 illustrates an exemplary simplified network traffic management system 100 to which many variations may be made. For example, other types and numbers of systems, devices, components, and elements in other topologies may be used to add into the illustrated system or replace any part of the system. Furthermore, one or more of the components depicted in the network traffic management system 100, such as the network traffic management apparatus 20 and the network element 42, may be configured to operate as virtual instances on the same or different physical machine. In this way, in some scenarios, one or more of network traffic management apparatus 20 and the network element 42 may operate on the same physical device rather than as separate devices communicating through a communication network 40 as illustrated in FIG. 1. Similarly, one network traffic management apparatus 20 and/or network element 42 may operate on more than one physical device and communicatively connected with the rest parts or components of the network traffic management apparatus 20 and/or network element 42 via a communication network 40 as shown in FIG. 1.

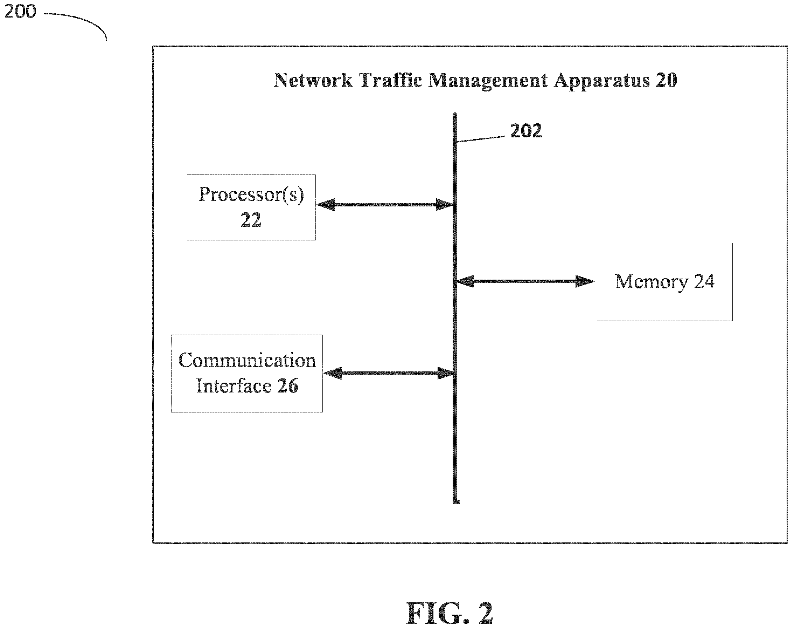

FIG. 2 shows an exemplary execution environment 200 of the network traffic management apparatus 20. In the execution environment 200, the network traffic management apparatus 20 may include processor(s) 22, a memory 24, a communication interface 26 and/or other circuitries, which are coupled together by a bus 202 or other communication link. It is to be understood that the network traffic management apparatus 20 may include other types and/or numbers of elements in other configurations. The processor(s) 22 of the network traffic management apparatus 20 may execute programmed instructions stored in the memory 24 of the network traffic management apparatus 20 for any number of the functions identified in this disclosure. The processor(s) 22 of the network traffic management apparatus 20 may include one or more central processing units (CPU) or general-purpose processors with one or more processing cores, for example, although other types of processor(s) can also be used. The communication interfaces 26, which may support wireless, e.g., Bluetooth, Wi-Fi, WLAN, cellular (4G, LTE/A, 5G), and/or wired, Ethernet, Gigabit Ethernet, optical networking protocols. The communication interfaces 26 may also include serial interfaces, such as universal serial bus (USB), serial ATA, IEEE 1394, lighting port, I2C, slimBus, or other serial interfaces. In some examples, the execution environment 200 may further include power functions and various input interfaces (not shown in FIG. 2). In some examples, the execution environment may further include a user interface that may include human-to-machine interface devices and/or graphical user interfaces (GUI).

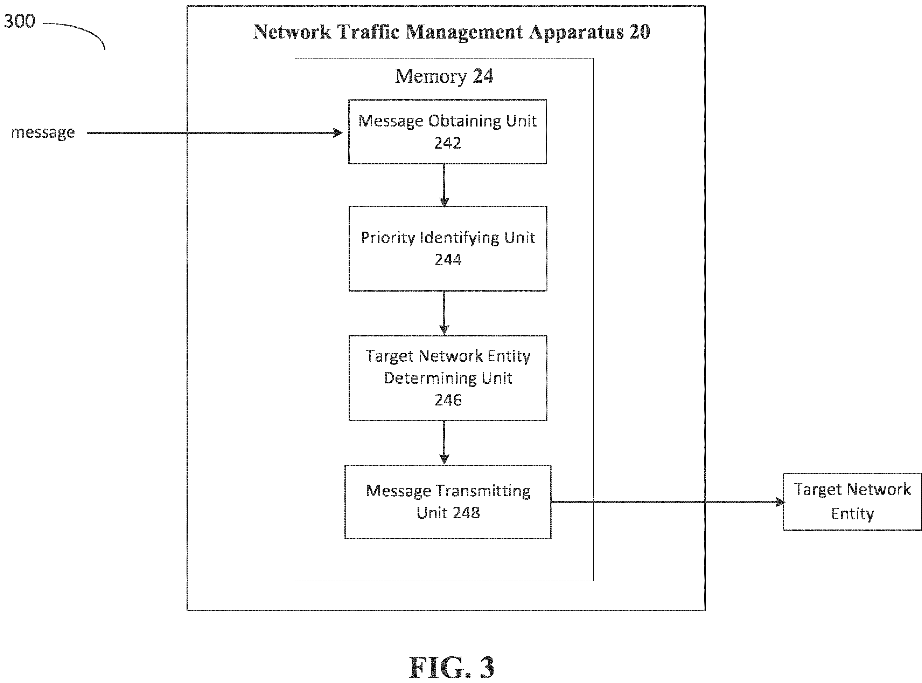

The memory 24 of the network traffic management apparatus 20 may store these programmed non-transitory computer-readable instructions for one or more aspects of the technology as described and illustrated herein, although some or all of the programmed instructions could be stored elsewhere. A variety of different types of memory storage devices, such as random access memory (RAM), read only memory (ROM), Hard Disk Drive (HDD), solid state drives, flash memory, Erasable Programmable Read Only Memory (EPROM), or other computer readable medium such as magnetic or optical disc (e.g., Compact Disc Read Only Memory (CD-ROM)) which is read from and written to by a magnetic, optical, or other machine-readable medium that is coupled to the processor(s) 22, may be used as the memory 24. Accordingly, the memory 24 of the network traffic management apparatus 20 may store application(s) that can include computer executable instructions that, when executed by the network traffic management apparatus 20, cause the network traffic management apparatus 20 to perform actions or operations, such as to transmit, receive, or otherwise process messages, for example, and to perform other actions or operations described and illustrated below with reference to FIGs. 3-6. An application may be implemented as a unit, module, component, instance, or engine of other applications and/or operating system extensions, plugins, or the like. The application(s) can be executed within or as virtual machine(s) or virtual server(s) that may be managed in a cloud-based computing environment, without being tied to one or more specific physical network computing devices.

The methods, devices, processing, circuitry, and logic described below may be implemented in many different ways and in many different combinations of hardware, software, firmware, or combination thereof. For example, all or parts of the implementations may be circuitry that includes an instruction processor, such as a Central Processing Unit (CPU), microcontroller, or a microprocessor; or as an Application Specific Integrated Circuit (ASIC), Programmable Logic Device (PLD), or Field Programmable Gate Array (FPGA); or as circuitry that includes discrete logic or other circuit components, including analog circuit components, digital circuit components or both; or any combination thereof. The circuitry may include discrete interconnected hardware components or may be combined on a single integrated circuit die, distributed among multiple integrated circuit dies, or implemented in a Multiple Chip Module (MCM) of multiple integrated circuit dies in a common package, as examples.

Accordingly, the circuitry may store or access instructions for execution, or may implement its functionality in hardware alone. The instructions may be stored in a tangible storage medium (e.g., memory 24) that is other than a transitory signal. A product, such as a computer program product, may include a storage medium and instructions stored in or on the medium, and the instructions when executed by the circuitry in a device may cause the device to implement any of the processing described above or illustrated in the drawings.

The implementations discussed herein may be distributed. For instance, the circuitry may include multiple distinct system components, such as multiple processors and memories, and may span multiple distributed processing systems. Parameters, databases, and other data structures may be separately stored and managed, may be incorporated into a single memory or database, may be logically and physically organized in many different ways, and may be implemented in many different ways. Example implementations include linked lists, program variables, hash tables, arrays, records (e.g., database records), objects, and implicit storage mechanisms. Instructions may form parts (e.g., subroutines or other code sections) of a single program, may form multiple separate programs, may be distributed across multiple memories and processors, and may be implemented in many different ways. Example implementations include stand-alone programs, and as part of a library, such as a shared library like a Dynamic Link Library (DLL). The library, for example, may contain shared data and one or more shared programs that include instructions that perform any of the processing described above or illustrated in the drawings, when executed by the circuitry.

As discussed above and referring back to FIG. 1, the network traffic management apparatus 20 may be implemented on the network elements 42(1)-(n) of the communication network 40. It is to be understood that different network technologies may be applied by the communication network 40. For example, Ethernet, Wi-Fi, Satellite Networks, 4G/LTE (Long-Term Evolution), 5G, and various internet protocols like TCP/IP. The implementations of the network traffic management apparatus 20 may be particularly desirable for networks that provide a plurality of latency sensitive services or require a higher and more reliable data transmissions. For example, 5G based network is a kind of such network. A 5G based network may be designed to connect virtually everyone and everything together including machines, objects, and devices. Accordingly, 5G wireless technology is expected to deliver higher multi-Gbps peak data speeds at ultra-low latency with more reliability, massive network capacity and increased availability. Therefore, implementing the network traffic management apparatus 20 of this disclosure on various network elements of a 5G network may help optimizing routing of latency sensitive messages.

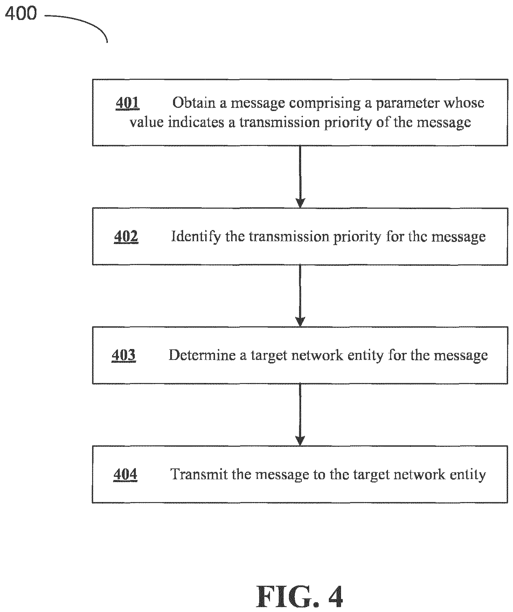

Referring again to FIG. 1, network elements 42(1)-(n) on which the network traffic management apparatus 20 may be implemented, may be various devices which function as a part of the control plane of the communication network 40. In some examples, the network traffic management apparatus 20 may be more desirable to be implemented on proxies (e.g., 42(1) and 42(3) in FIG. 1). This is because, a proxy may function as a gateway or intermediary network element between the client device 10 and other network elements (e.g., 42(2), 42(4), 42(n in FIG. 1). Due to this broader role in service management and security, a proxy may have its specific influence on how data is routed or managed and how service is provided within a communication network 40. In 5G scenario, such proxies may be Service Communications Proxy (SCP) and Security Edge Protection Proxy (SEPP). SCP may be deployed as a proxy across multiple Network Functions (NF) in a 5G network. The NFs may be considered as exemplary network elements 42 in FIG. 1, which will be described in conjunction with FIG. 4. SCP may be placed between two network elements and may play an important role in transferring messages therebetween. For example, SCP may be responsible for exposing and providing access to network services and capabilities. SCP may perform other multiple key functions, include but not limited to, establishing reliable, secure connectivity to the network for end users, providing routing control, resiliency, and observability to the core network. SEPP may provide security and protection at the network edge, enforce security policies, perform access control, and protect the core network from various security threats. SEPP may also ensure the confidentiality, integrity, and authenticity of data transmitted over the network. Therefore, similar as SCP, SEPP may also transfer message from one network element to another network element *(e.g.,* NF). In some examples, the network traffic management apparatus 20 may also be implemented on other kinds of network elements, such as routing agents (e.g., Diameter Routing Agent (DRA)) of a communication network 40.

Referring to FIG. 3, an exemplary block diagram of the network traffic management apparatus 20 to optimize routing of a message is illustrated. In FIG. 3, the network traffic management apparatus 20 may include message obtaining unit 242, priority identifying unit 244, target network entity determining unit 246, and message transmitting unit 248. Operations performed by those units will be described in conjunction with the flow diagram illustrated in FIG. 4.

The term "unit" (and other similar terms such as module, submodule, etc.) may refer to computing software, firmware, hardware, and/or various combinations thereof. At a minimum, however, units are not to be interpreted as software that is not implemented on hardware, firmware, or recorded on a non-transitory processor readable recordable storage medium. Indeed, "unit" is to be interpreted to include at least some physical, non-transitory hardware such as a part of a processor, circuitry, or computer. Two different units may share the same physical hardware (e.g., two different units can use the same processor and network interface). The units described herein can be combined, integrated, separated, and/or duplicated to support various applications. Also, a function described herein as being performed at a particular unit can be performed at one or more other units and/or by one or more other devices instead of or in addition to the function performed at the particular unit. Further, the units can be implemented across multiple devices and/or other components local or remote to one another. Additionally, the units can be moved from one device and added to another device, and/or can be included in both devices. The units can be implemented in software stored in memory or non-transitory computer-readable medium. The software stored in the memory or medium can run on a processor or circuitry (e.g., ASIC, PLA, DSP, FPGA, or any other integrated circuit) capable of executing computer instructions or computer code. The units can also be implemented in hardware using processors or circuitry on the same or different integrated circuit.

FIG. 4 illustrates a flow diagram of an exemplary process 400 for optimizing routing for a message by the network traffic management apparatus 20, wherein the network traffic management apparatus 20 may be implemented on one or more network elements (e.g., network elements 42(1), 42(3) as illustrated in FIG. 1). In the following, steps illustrated in FIG. 4 will be described in conjunction with the logic of the network traffic management apparatus 20 shown in FIG. 3.

At step 401, a client device 10 may send a request to a server 30 via the communication network 40. Such message may be forwarded by a plurality of devices and pass through one or more network elements. A network element on which the network traffic management apparatus 20 is implemented may be one of such network elements. Therefore, the message obtaining unit 242 of the network traffic management apparatus 20 may obtain the message. The header of the message may comprise a parameter whose value may indicate a transmission priority. Therefore, if the message has a transmission priority, it may be indicated by the value of the parameter. If the message does not have a transmission priority, the value of the parameter may be a null, an invalid value, or a particular value specified by the network. It is to be understood that there may be a plurality of different levels of transmission priorities, such as two, three, ten, twenty, thirty or even more (*e.g.,* spanning from 0 to 31). In this regard, different latency sensitive services may be assigned with different transmission priorities. A transmission priority may be assigned at a control plane level of a communication network, based on one or more factors. One factor that may be considered can be the nature of the service, such as whether the service is a mission critical service. If the service is a mission critical service, how emergent it is as compared to other mission critical services may be further considered. Other factors may include, but not limited to, the speed that the service requires, the number of resources the service may occupy, the influence on the service if there is a delay, the impact on user experiences, the QoS of a particular service, etc. It is to be understood that depending on the network architecture, the services or applications being provided thereof, along with other considerations such as Service Level Agreement (SLA), the number of transmission priorities may be different from one network environment to another. Similarly, even with the same number of transmission priorities, the specific value may be different. For example, the minimum value such as zero may indicate a highest transmission priority in one network environment, while zero may indicate a lowest or no transmission priority in another network environment. The transmission priorities given to different services and corresponding values used for indicating those transmission priorities may be referred to as a (transmission priority) mapping mechanism of a network. Differences between different mapping mechanisms of two or more networks may be referred to as discrepancies or gaps between those networks.

At step 402, in response to the message obtaining unit 242 receiving the message sent from the client device 10, priority identifying unit 244 of the network traffic management apparatus 20 may identify the transmission priority for the received message. Because there is a parameter for indicating the transmission priority for this message, the priority identifying unit 244 may identify the transmission priority for this message based on the value of this parameter. The parameter utilized for indicating the transmission priority of the message may be one reserved by a specific protocol or specification that the communication network follows (e.g., 3gpp-Sbi-Message-Priority custom HTTP header as specified in SBI Message Priority (SMP) mechanism, or 5G QoS Identifier (QI) value). Alternatively, other self-defined parameters may also be used in a network environment.

At step 403, in response to the priority identifying unit 244 identifying the transmission priority of the message, the target network entity determining unit 246 of the network traffic management apparatus 20 may determine a target network entity for the message based on its transmission priority. For example, if the priority identifying unit 244 identifies that the message does not have a transmission at all, then the target network entity determining unit 246 may decide not to interfere with existing routing mechanism or routing decision of the message. Therefore, the target network entity determining unit 246 does not change any routing decisions made by the network element 42(1) on which the network traffic management apparatus 20 is implemented, or by other network elements 42. In some examples, the target network entity determining unit 246 may determine a target network entity for the message which does not have a transmission priority. However, it may process and serve other messages which have higher transmission priority first. Accordingly, a best target network entity may be chosen for a message having higher transmission priority, and a best (if available) or a better target network entity may be chosen for the message having no transmission priority. The target network entity may refer to a next hop network entity *(e.g.,* any network devices) which may be a destination of the message or along the route to the destination, or a next hop network element 42 as illustrated in FIG. 1. The next hop network element 42 may be a same or different type of network element 42 as the one on which the network traffic management apparatus 20 being implemented. The target network entity may also refer to another network element 42 which is not exactly the next hop of the message but is a target network element 42 to which the message will be forwarded to. For example, if that another network element 42 provides a service or application which is requested in the message sent by the client device.

In some examples, the target network entity determining unit 246 may only determine a target network entity for the message if the transmission priority of the message is higher than a pre-determined transmission priority threshold. In this regard, if the transmission priority identified by the priority identifying unit 244 is equal to or lower than the pre-determined transmission priority threshold, the target network entity determining unit 246 may be designed as not interfere with existing routing mechanism and routing decisions for the message. It is to be understood that such pre-determined transmission threshold may be a static value or may be changed or updated in real time. Also, it is to be understood that specific value of the threshold may be determined based on a plurality of factors which may be relevant to a specific network environment, such as the current network load, the current average delay for data transmissions, the percentage of usage of the network resources, etc.

At step 403, among candidate network entities, the target network entity determining unit 246 may select a network entity based on a transmission success rate. For example, a network entity having a higher or a highest transmission success rate may be selected as the target network entity for the message. In some examples, the target network entity determining unit 246 may select a network entity based on a transmission delay. For example, a network entity having a lower or least transmission delay may be selected as the target network entity for the message. In some further examples, a target network entity may be determined or selected based on both the transmission success rate and the transmission delay. In this case, a same or different weight may be considered for the transmission success rate and the transmission delay, respectively. In this regard, the target network entity determining unit 246 or the network traffic management apparatus 20 may maintain the historical status of those candidate network entities. The status may relate to any information indicating how a network entity is behaving with respect to message handling. For example, a failure rate and/or success rate of this network entity, how did the network entity responded to a message and how fast it responded, whether has a failure recently and what caused the failure. The candidate network entities may include any of the above potential target network entities, such as next hop network entities, or other network elements (e.g., network elements 42 as illustrated in FIG. 1) to whom the message may be forwarded or directed. Such status information or data may be updated periodically, or in real time, or in any mechanism that designed by the network. In some examples, if there are a plurality of messages to be forwarded, the target network entity determining unit 246 may select a best candidate for a message having the highest transmission priority. n if the target network entity determining unit 246 founds there has been a failure at a specific network entity, it may determine not to take this network entity as a target one for a message having a high transmission priority for a certain period of time. It is to be understood that the status information may be obtained in various manners, depending on the specific network environment and the technology being applied thereof. Among the candidate network entities, with a best one being selected by the target network entity determining unit 246 based on the status maintained thereof, routing of the message may be optimized. In this way, the capability of handling a latency sensitive message at the network element may be enhanced and the overall delay may potentially be reduced. Then the service provided in the network may be enhanced and user experiences may be improved as well.

In some examples, the target network entity determining unit 246 may further be able to alter the transmission priority of the message. For example, if in response to receiving the message, the target network entity determining unit 246 or the network traffic management apparatus 20 detects that a transmission delay happened during the routing of the message. Or alternatively, the target network entity determining unit 246 detects that there may be a transmission delay during the subsequent routing of the message (e.g., unnecessary extra next hop network entities). In those situations, the target network entity determining unit 246 may alter (*e.g.,* either increase or decrease the parameter value based on the mapping mechanism) the transmission priority of the message to increase its transmission priority. This means in addition to selecting a best target network entity for the message at the current network element, the message will be handled at a higher transmission priority at following subsequent network elements. In this way, the routing of the message is optimized at the current network element and will be prioritized at other network elements to which the message being forwarded. In some examples, this operation may also be applied to messages having a transmission priority that equal to or lower than the pre-determined transmission priority threshold, or messages that have no transmission priority at all. In this case, the target network entity determining unit 246 may increase the transmission priority of those messages, for example, depending on how serious the delay was or will be.

Still take a 5G network as an exemplary network environment. In a 5G network, there are various network elements which may also referred to as Network Functions (NFs), which are a part of control plane of a 5G network. NFs are components that responsible for generating or producing a specific network function or service. NFs may include but not limited to, SCP and SEPP as mentioned above, Access Mobility Management Function (AMF), User Plane Function (UPF), Packet Data Unit (PDU), Authentication Server Function (AUSF), Unified Data Management (UDM), Session Management Function (SMF), Application Function (AF), and Policy Control Function (PCF), Network Slice Selection Function (NSSF), Charging Function (CHF), etc. Those different network elements or functions play an important role in ensuring the functionality, security, and performance of a 5G network. Those network functions are designed to support various aspects of network operation, management, and service delivery. Those network elements may work together and communicate with each other through Service-Based Interface (SBI). In such 5G scenario, as discussed above, the network traffic management apparatus 20 may be executed on a SCP or SEPP or both. Then the target network entity determining unit 246 may identify *(e.g.,* by checking 5QI value of the received message and the status information maintained thereof) a best NF to serve a message having a transmission priority *(e.g.,* a mission critical message). The best NF may have a highest success rate or a least round-trip delay. In such exemplary 5G network, sometimes a NF or service provided by that NF is not functioning as expected or has encountered an issue. This may also be called a NF failure. This may happen for example due to service disruption, unstable connectivity, etc. If a NF failure happened during a transmission of a message, there is a transmission delay. Then the message may be directed to a fallback NF. In this case, in addition to selecting a best fallback NF, considering there is already a delay due to a NF failure, the target network entity determining unit 246 may further increase the transmission priority of the message to potentially avoid further delay(s) in subsequent routing. Similarly, if the target network entity determining unit 246 detects that there are or may be extra next hope devices (e.g., one or more SCP) in the following routing, based on the routing decisions of the message, it may also alter and thereby increase the transmission priority of the message.

At step 404 of FIG. 4, and also as illustrated in FIG. 3, message transmitting unit 248 of the network traffic management apparatus 20 may transmit the message to the determined target network entity.

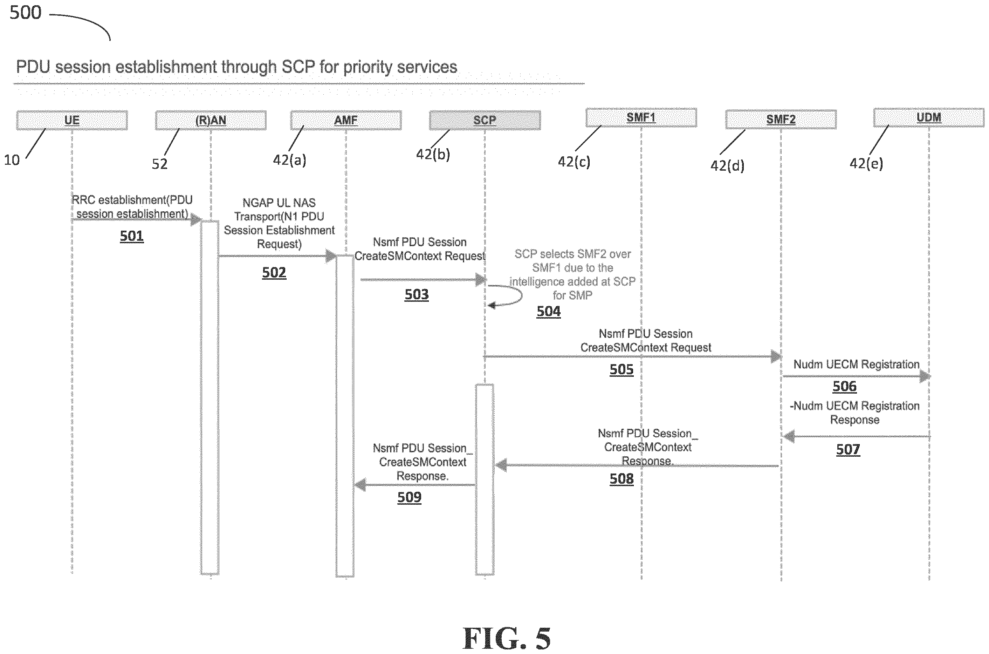

FIG. 5 illustrates an exemplary message flow 500 with implementation of the method of optimizing routing for a message in the network traffic management system 100. Specifically, FIG. 5 illustrates a process of establishing a PDU session, which is a logical connection and data path between the UE and the 5G core network. The illustrated call flow originates from a client device 10 (UE) with a network element 42 (e) (UDM) as its destination. The communication network of the network traffic management system 100 in FIG. 5 is illustrated as a 5G network. Some network entities in this 5G network may be some of the NFs enumerated above, such as AMP, SMF, UDM. Specifically, the illustrated message flow may pass (R)AN 502 which is a Radio Access Network, AMF 42(a), SCP 42(b), SMF1 42(c), SMF2 42(d), and UDM 42(e). At step 501, as an exemplary client device 10 of a network traffic management system 100, UE may send a message to request establishing a PDU session. At step 502, the (R)AN 502 may accordingly generate and send a request message for a PDU session establishment. At step 503, in response to receiving the request from the (R)AN 502, AMF 42(a) may initiate a request message to SCP 42(b). As a proxy in a 5G network, the SCP 42(b) is a network element that implements or executes the network traffic management apparatus 20 of this disclosure. In response to receiving the message from AMF 42(a) by the message obtaining unit 242 of the network traffic management apparatus 20, the priority identifying unit 244 identifies that the message relates to a service having a transmission priority. Then the target network entity determining unit 246 may choose a best network entity as a target network entity for the message. Normally, SMF1 42(c) may have a better performance than SMF2 42(d) *(e.g.,* a higher transmission success rate or a less transmission delay). However, the target network entity determining unit 246 may found that SMF2 42(d) has a better performance than SMF 1 42(c) recently, based on the status information maintained for the candidate network entities. Therefore, at step 504, instead of choosing SMF1 42(c), the target network entity determining unit 246 may determine that SMF2 42(d) should be the target network entity for this message. In this way, due to implementing the network traffic management apparatus 20 at SCP 42(b), SCP 42(b) may act in an intelligent way. Therefore, routing of the UE's request may be optimized at SCP 42(b) by choosing a better next network element to forward the request. Then at step 505, SCP 42(b) forwards the message received from AMF 42(a) to its selected next hop SMF2 42(d). At steps 506 and 507, in response to receiving the message forwarded from SCP 42(b), SMF2 42(d) initiates a registration request to UDM 42(e) and receives a response therefrom subsequently. Then SMF2 42(d) generates a response and sends to SCP 42(b) at step 508, and SCP 42(b) forwards the received response to AMF42(a) to establish a PDU session at step 509.

It is to be understood that as discussed above, there are various NFs in a 5G network. With a plurality of different applications and services being provided in the network, there may be various sessions for different purposes. In addition, a routing decision may also be complicated which may balance many factors, such as QoS, SLA, the network load, etc. Therefore, there may be various different call flows passing through those or different network elements (e.g., PCF, CHF, etc.) in the network. In some cases, even a session for the same purpose and between the same network entities (e.g., the same client device and the same UDM) may have a different routing path and passes through different network elements. Therefore, the message flow and the specific messages illustrated in FIG. 5 are merely a specific exemplary scenario to illustrate an environment to implement or execute the network traffic management apparatus 20 of this disclosure.

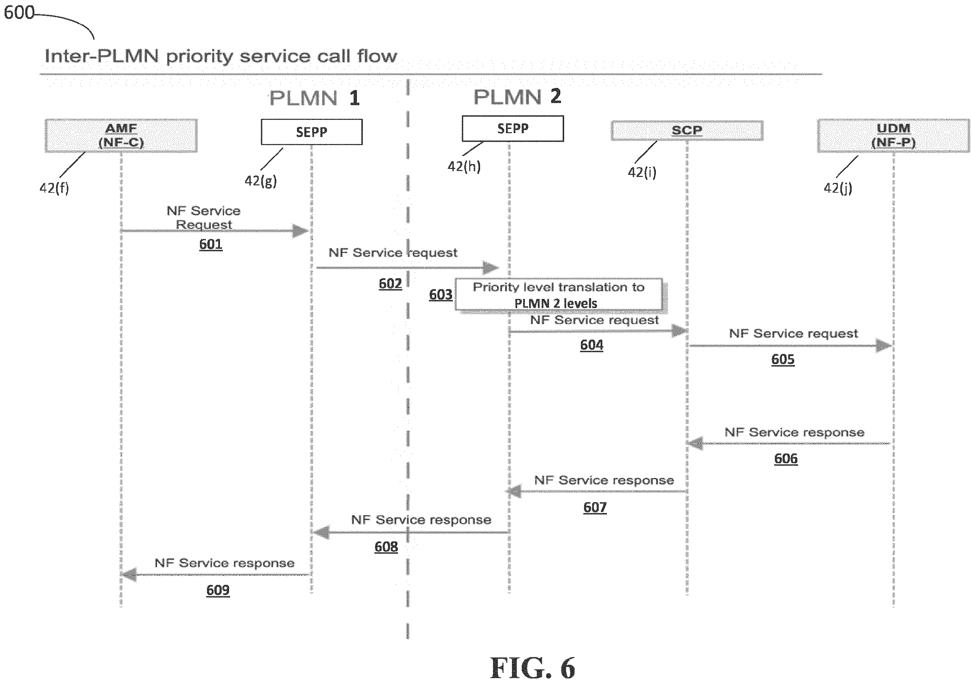

FIG. 6 illustrates another exemplary message flow 600 implementing the method of optimizing routing for a message in the network traffic management system 100, with a 5G network as an exemplary network environment. In some examples, routing of a message may relate to different networks, for example, from a Public Land Mobile Network 1 (PLMN) to another different PLMN 2 as illustrated in FIG. 6. Such scenario may be referred to as roaming. When there is a roaming, one PLMN may be called a mobile subscriber's home PLMN, and the other PLMN where the mobile subscriber is roaming may be called a visited PLMN. In FIG. 6, two PLMNs are illustrated as PLMN 1 AND PLMN 2, wherein either one may be a home PLMN of a client device 10 in FIG, 1, and the other may be a visited PLMN. As discussed above, SEPP may be a proxy to provide security and protection at the network edge and control data transmission between networks. For example, when an operator has multiple core networks, there may be a SEPP or similar network element at the edge of each core network. As illustrated in FIG. 6, the SEPP 42(g) and SEPP 42(h) of different networks may implement or execute the network traffic apparatus 20 of this disclosure. In FIG. 6, AMF 42(f), SEPP 42(g) of PLMN 1, SEPP 42(h), SCP 42(i) and UDM 42(j) of PLMN 2 are some of the NFs enumerated above, which are exemplary network elements 42 in FIG. 1. At step 601, AMF 42(f) of PLMN 1 sends a request to SEPP 42(g), which forwards the request to another SEPP 42(h) of another network PLMN 2 at step 602. At step 603, the SEPP 42(h) which implements or executes the network traffic management apparatus 20 *(e.g.,* the target network entity determining unit 246) may detect whether the received message is transmitted from a different network. Herein, different networks may be deployed in the same way as each other. But they may also be deployed independently from each other and therefore may have a different mapping mechanism for a plurality of different transmission priorities. Therefore, values of the parameter indicating a transmission priority of a message may have different meanings for two different network environments. In other words, different values may be used to for the same latency sensitive message, wherein the values may indicate the same or a different transmission priority. It is conceivable that although different mapping mechanisms are used, the same transmission priority for a message is desired to be consistent during the transmission (e.g., expected to be at the same QoS level or per SLA between different network operators). Therefore, in response to detecting that the NF service request message is transmitted from PLMN 1 to PLMN 2, the network traffic management apparatus 20 *(e.g.,* the target network entity determining unit 246) may further determine whether PLMN 1 and PLMN 2 have different mapping mechanisms. If different mapping mechanisms are used, the network traffic management apparatus 20 *(e.g.,* the target network entity determining unit 246) may update the value of the parameter based on the mapping mechanism of the network where the message will be forwarded to (e.g., translate the value to the ones utilized in PLMN 2). Then at step 604, the SEPP 42(h) forwards the received request to SCP 42(i) of PLMN 2, which in turn forwards the request to UDM 42(j) at step 605. Upon receiving the request, UDM 42(j) generates a response and sends the response back at step 606. At steps 607-609, the response is transmitted back to AMF 42(f) via the SCP 42(i), SEPP 42(h) of PLMN 2 and SEPP 42 (g) of PLMN 1. Therefore, the network traffic management apparatus may bridge gap(s) across different networks that deployed by the same or different operators.

It is to be understood that the specific message and the routing of the message illustrated in FIG. 6 is merely a specific exemplary scenario. In practice, various NFs or network elements may be involved in a call flow in relation to various other kinds of requests.

With implementations of all or part of the above discussed operations of a method to optimize routing of a message on a network traffic management apparatus, a latency sensitive message may be transmitted in a better routing path. Therefore, a delay during the transmission may be reduced. The method(s) and the network traffic management apparatus may be implemented on various network elements, for example, on proxies (e.g., SCP and/or SEPP) of a network. In this regard, when transmitting a message having a transmission priority in the network, in addition to prioritize its routing generally, routing delays and real time network elements failures may be taken into account by the network traffic management apparatus and the corresponding method. Therefore, by implementing network traffic management apparatus of this disclosure, the capabilities of those network elements in terms of routing decisions may be enhanced. Due to better or improved routing decisions for a message having a transmission priority, an overall delay or latency for a latency sensitive service such as mission critical services, may be reduced. For example, implementing the network traffic management apparatus of this disclosure may facilitate meeting the low-latency criteria for a 5G network. Also, when a latency sensitive service relates to a data transmission across different networks, discrepancy between different networks in terms of transmission priority mapping mechanism may be further considered and eliminated by a network traffic management apparatus. In this way, different networks may be bridging together seamlessly by one or more network traffic management apparatus of this disclosure. Furthermore, by implementing the network traffic management apparatus in the network, other network elements of a control plane of the network may be deployed in a smart way at locations behind those network traffic management apparatus. Then routing of a latency sensitive message may be further optimized.

Throughout the specification and claims, terms may have nuanced meanings suggested or implied in context beyond an explicitly stated meaning. It will be further understood that: the term "or" may be inclusive or exclusive unless expressly stated otherwise; the term "set" may comprise zero, one, or two or more elements; the terms "some", "another," and "particular" are used as naming conventions to distinguish elements from each other and does not imply an ordering, timing, or any characteristic of the referenced items unless otherwise specified; the terms "such as", "e.g.," "for example", and the like describe one or more examples but are not limited to the described examples(s); the term "comprises" and/or "comprising" specify the presence of stated features, but do not preclude the presence or addition of one or more other features.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an example is included in at least one example of the present solution. Thus, discussions of the features and advantages, and similar language, throughout the specification may, but do not necessarily, refer to the same example.

Furthermore, the described features, advantages and characteristics of the present solution may be combined in any suitable manner in one or more implementations or examples. One of ordinary skill in the relevant art will recognize, in light of the description herein, that the present solution can be practiced without one or more of the specific features or advantages of a particular implementation or example. In other instances, additional features and advantages may be recognized in certain implementations or examples that may not be present in all implementations of the present disclosure.

## Claims

1. A method for optimizing routing of a message, the method implemented by a network traffic management system comprising one or more network traffic management apparatuses, client devices, or server devices, the method comprising:
obtaining a message comprising a header with a parameter with a value indicating one of a plurality of transmission priorities for the message;
identifying the one of the transmission priorities for the message based on the value in the parameter within the header;
determining a target network entity for the message based on the identified transmission priority of the message; and
transmitting the message to the target network entity.

2. The method of claim 1, wherein the determining the target network entity for the message based on the identified transmission priority of the message further comprises:
determining the target network entity for the message when the identified transmission priority of the message is determined to be higher than a predetermined transmission priority threshold.

3. The method of any of claims 1-2, in response to the identified transmission priority of the message being determined to be higher than a predetermined transmission priority threshold, the method further comprising,
detecting whether the message has a transmission delay; and
altering, in response to the detection of the transmission delay, a value of the parameter to indicate a higher transmission priority than the identified transmission priority for the message, wherein a subsequent routing of the message is prioritized based on the higher transmission priority.

4. The method of any of claims 1-3, wherein the target network entity is determined based on a transmission success rate or a transmission delay among candidate network entities.

5. The method of any of claims 1-4, the method further comprising:
detecting whether the message is transmitted from a first network environment to a second network environment deployed independently from the first network environment;
determining, in response to the detection of the message being transmitted from the first network environment to the second network environment, whether different values of the parameter are used to indicate the identified transmission priority of the message in the first network environment and the second network environment; and
updating, in response to the determination of different values of the parameter being used to indicate the identified transmission priority of the message, the parameter within the header to a value used to indicate the identified transmission priority of the message in the second network environment.

6. A non-transitory computer readable medium having stored thereon instructions for optimizing routing of a message, comprising executable code which when executed by one or more processors, causes the one or more processors to:
obtain a message comprising a header with a parameter with a value indicating one of a plurality of transmission priorities for the message;
identify the one of the transmission priorities for the message based on the value in the parameter within the header;
determine a target network entity for the message based on the identified transmission priority of the message; and
transmit the message to the target network entity.

7. The non-transitory computer readable medium of claim 6, wherein the determine the target network entity for the message based on the identified transmission priority of the message further comprises:
determine the target network entity for the message when the identified transmission priority of the message is determined to be higher than a predetermined transmission priority threshold.

8. The non-transitory computer readable medium of any of claims 6-7, wherein the one or more processors are further configured to, in response to the identified transmission priority of the message being determined to be higher than a predetermined transmission priority threshold:
detect whether the message has a transmission delay; and
alter, in response to the detection of the transmission delay, a value of the parameter to indicate a higher transmission priority than the identified transmission priority for the message, wherein a subsequent routing of the message is prioritized based on the higher transmission priority.

9. The non-transitory computer readable medium of any of claims 6-8, wherein the target network entity is determined based on a transmission success rate or a transmission delay among candidate network entities.

10. The non-transitory computer readable medium of any of claims 6-9, wherein the one or more processors are further configured to:
detect whether the message is transmitted from a first network environment to a second network environment deployed independently from the first network environment;
determine, in response to the detection of the message being transmitted from the first network environment to the second network environment, whether different values of the parameter are used to indicate the identified transmission priority of the message in the first network environment and the second network environment; and
update, in response to the determination of different values of the parameter being used to indicate the identified transmission priority of the message, the parameter within the header to a value used to indicate the identified transmission priority of the message in the second network environment.

11. An apparatus for optimizing routing of a message, comprising memory comprising programmed instructions stored in the memory and one or more processors configured to be capable of executing the programmed instructions stored in the memory to:
obtain a message comprising a header with a parameter with a value indicating one of a plurality of transmission priorities for the message;
identify the one of the transmission priorities for the message based on the value in the parameter within the header;
determine a target network entity for the message based on the identified transmission priority of the message; and
transmit the message to the target network entity.

12. The apparatus of claim 11, wherein the determine the target network entity for the message based on the identified transmission priority of the message further comprises:
determine the target network entity for the message when the identified transmission priority of the message is determined to be higher than a predetermined transmission priority threshold.

13. The apparatus of any of claims 11-12, wherein the one or more processors are further configured to, in response to the identified transmission priority of the message being determined to be higher than a predetermined transmission priority threshold:
detect whether the message has a transmission delay; and
alter, in response to the detection of the transmission delay, a value of the parameter to indicate a higher transmission priority than the identified transmission priority for the message, wherein a subsequent routing of the message is prioritized based on the higher transmission priority.

14. The apparatus of any of claims 11-13, wherein the target network entity is determined based on a transmission success rate or a transmission delay among candidate network entities.

15. The apparatus of any of claims 11-14, wherein the one or more processors are further configured to:
detect whether the message is transmitted from a first network environment to a second network environment deployed independently from the first network environment;
determine, in response to the detection of the message being transmitted from the first network environment to the second network environment, whether different values of the parameter are used to indicate the identified transmission priority of the message in the first network environment and the second network environment; and
update, in response to the determination of different values of the parameter being used to indicate the identified transmission priority of the message, the parameter within the header to a value used to indicate the identified transmission priority of the message in the second network environment.
